# EUROPEAN PATENT SPECIFICATION

(11) **EP 0 507 844 B1**
(45) Date of publication and mention of the grant of the patent: **01.03.1995**
(21) Application number: 91902227.7
(22) Date of filing: 21.12.1990
(51) Int. Cl.: B01D 29/94, B01D 29/60

(54) **METHOD AND DEVICE FOR CARRYING OFF THE FILTER CAKE FROM A FILTER APPARATUS**
VERFAHREN UND ANLAGE ZUM AUSTRAGEN VON RÜCKSTÄNDEN AUS FILTERANLAGEN
PROCEDE ET DISPOSITIF D'ENLEVEMENT DU GATEAU DE FILTRE D'UN APPAREIL DE FILTRAGE

(30) Priority: 29.12.1989 NL 8903177
(43) Date of publication of application: 14.10.1992
(73) Proprietor: AMAFILTER BV, NL-1823 CL Alkmaar (NL)
(72) Inventor: DOSOUDIL, Martin, NL-1800 AJ Alkmaar (NL)
(74) Representative: Koomen, M.J.I.
(86) International application number: PCT/NL90/00184
(87) International publication number: WO 91/09661

(56) References cited:
- NL-A- 8 005 787

## Description

The invention relates to a method for the discharge of filter cake loosened from the filter elements, from out of a filter vessel of a filter apparatus, preferably a high pressure continuous filter apparatus, the filter cake being conveyed towards a discharge shaft to fall down into it, which shaft can be opened at or near its bottom end, so that the filter cake is pressed or blown out of the shaft by the over-pressure within the filter vessel, the opening and closing of the discharge shaft taking place automatically by the controlling of two or more sensors, positioned within the shaft, and by means of which the height of the cake within the shaft can be determined, a high level sensor controlling the opening of the discharge shaft such that when the cake reaches a certain maximum height within the shaft, the discharge shaft is opened for a certain period of time.

Such a method is known from NL-A-8005787.

With this known method the opening of the discharge takes place for a certain time interval, which time interval has a fixed duration. The opening time may not be efficiently adapted to the nature of the cake to be removed.

It is an object of the invention to obviate this drawback of the known method.

The method according to the invention thereto is characterized in that a low level sensor controls the opening time such that the opening time of the next opening cycle is increased or decreased with a fixed time interval in dependance upon the not-reaching, respectively the passing of a certain desired minimum height of the cake within the shaft.

By applying the method asccording to the invention, the filter cake is continuously conveyed out of the filter vessel towards the discharge shaft, and the shaft opens and closes periodically to periodically press or blow away the cake, collected within the shaft, out of the shaft.

Thus, a high level sensor is present, which may be activated when the cake in the shaft reaches a maximum height, and a low level sensor, which is activated when the cake in the shaft drops down to or below this low level sensor.

The period of time for the opening of the discharge is efficiently adjustable in dependance upon the nature of the cake to be removed from out of the shaft, and thereby an automatic adaptation to the nature of the cake to be discharged, occurs. The opening time may fluctuate around a certain average value and in the same way the height of the cake at the low level may fluctuate around a certain average minimum value.

According to a characteristic of the method according to the invention, in order to prevent the cake from remaining hanging in the shaft, the outlet of the discharge, at the high level sensor remaining activated during a certain period of time, is increased at a following opening cycle.

The apparatus for applying the invented method consists of a high pressure continuous filter apparatus, with a filter vessel, provided with conveyor means, more in particular a conveyor screw, by means of which the filter cake, loosened from the filter elements, may be discharged out of the filter vessel, which conveyor means connect onto a discharge shaft, which at or near its bottom end is provided with a closing means, the shaft being provided with two or more sensors, by means of which the height of the cake within the shaft can be determined and the closing means of the shaft can be controlled, a high level sensor controlling the opening of the discharge shaft, such that when the cake reaches a certain maximum height within the shaft, the discharge shaft is opened for a certain period of time, the apparatus being characterized in that a low level sensor controls the opening time, such that the opening time of the next opening cycle is increased or decreased with a fixed time interval in dependance upon the not-reaching, respectively the passing of a certain desired minimum height of the cake within the shaft.

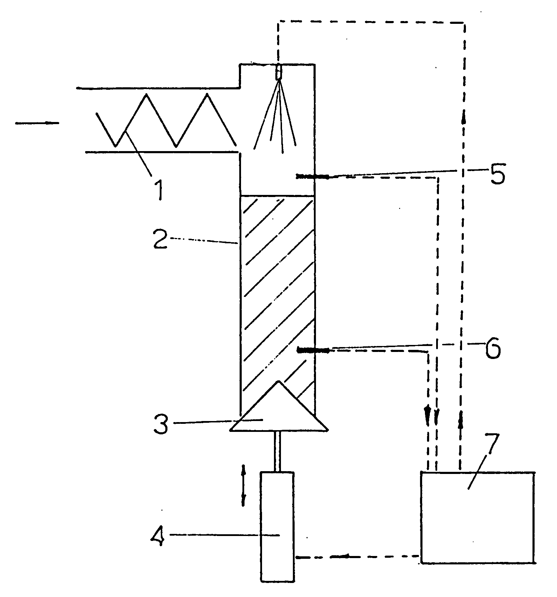

The invention will now be explained with reference to the drawing of an example of an embodiment.

As is shown in the figure, by means of a conveyor screw 1, which extends towards a filter vessel which is not shown in the drawing, the filter cake loosened from the filter elements of the filter vessel is conveyed towards a discharge shaft 2, which at its bottom end is provided with a sluice 3, which is controllable by means of an hydraulic cylinder 4.
Within the shaft the sensor 5 is positioned, such that when the filter cake reaches a certain height within the shaft, the controlling device 7 shortly opens up the sluice 3, causing the filter cake to be pressed or blown away out of the shaft by the over-pressure within the filter vessel. Within the shaft further the sensor 6 is positioned, such that when the filter cake does not reach, respectively passes a certain desired minimum height within the shaft, the controlling device 7 increases or decreases the opening time of the next opening cycle with a fixed time interval.

## Claims

1. Method for the discharge of filter cake loosened from the filter elements, from out of a filter vessel of a filter apparatus, preferably a high pressure continuous filter apparatus, the filter cake being conveyed towards a discharge shaft (2) to fall down into it, which shaft (2) can be opened at or near its bottom end, so that the filter cake is pressed or blown out of the shaft by the over-pressure within the filter vessel, the opening and closing of the discharge shaft (2) taking place automatically by the controlling of two or more sensors (5, 6) positioned within the shaft (2), and by means of which the height of the cake within the shaft (2) can be determined, a high level sensor (5) controlling the opening of the discharge shaft (2) such that when the cake reaches a certain maximum height within the shaft , the discharge shaft is opened for a certain period of time, characterized in that a low level sensor (6) controls the opening time such that the opening time of the next opening cycle is increased or decreased with a fixed time interval in dependance upon the not-reaching, respectively the passing of a certain desired minimum height of the cake within the shaft (2).

2. Method according to claim 1, characterized in that the outlet of the discharge shaft (2) at the high level sensor (5) remaining activated during a certain period of time, is increased at the following opening cycle.

3. Apparatus for carrying out the method according to one or more of the preceding claims, comprising a high pressure continuous filter apparatus, with a filter vessel, provided with conveyor means (1) for the discharge from out of the filter vessel of the filter cake loosened from the filter elements, which conveyor means (1) connect onto a discharge shaft (2), which at or near its bottom end is provided with a closing means (3), the shaft (2) being provided with two or more sensors (5, 6), by means of which the height of the cake within the shaft (2) can be determined and the closing means (3) of the shaft (2) can be controlled, a high level sensor (5) controlling the opening of the discharge shaft (2), such that when the cake reaches a certain maximum height within the shaft, the discharge shaft (2) is opened for a certain period of time, characterized in that a low level sensor (6) controls the opening time, such that the opening time of the next opening cycle is increased or decreased with a fixed time interval in dependance upon the not-reaching, respectively the passing of a certain desired minimum height of the cake within the shaft (2).

## Patentansprüche

1. Verfahren zum Austragen von von den Filterelementen gelöstem Filterkuchen aus einem Filterbehälter einer Filteranlage, vorzugsweise einer kontinuierlichen Hochdruck-Filteranlage, wobei der Filterkuchen in Richtung auf einen Austragsschacht gefördert wird, um in diesen hineinzufallen, und der Schacht (2) an oder nahe seinem unteren Ende geöffnet werden kann, so daß der Filterkuchen durch den Überdruck innerhalb des Filtergefäßes aus dem Schacht gedrückt oder geblasen wird, und das Öffnen und Schließen des Austragsschachtes (2) selbsttätig durch das Steuern von zwei oder mehr Sensoren (5, 6) erfolgt, die innerhalb des Schachtes (2) angeordnet sind und das Bestimmen der Höhe des Kuchens innerhalb des Schachtes (2) ermöglichen, und ein Hoch-Füllstand-Sensor (5) das Öffnen des Austragsschachtes (2) derart steuert, daß, wenn der Kuchen eine bestimmte maximale Höhe innerhalb des Schachtes erreicht, der Austragsschacht für eine bestimmte Zeitdauer geöffnet wird, dadurch gekennzeichnet, daß ein Niedrig-Füllstand-Sensor (6) die Öffnungszeit steuert derart, daß die Öffnungszeit des nächsten Öffnungszyklus' mit einem festgelegten Zeitintervall vergrößert oder verkleinert wird in Abhängigkeit von dem Nicht-Erreichen bzw. dem Passieren eines Soll-Minimum-Füllstandes des Kuchens innerhalb des Schachtes (2).

2. Verfahren nach Anspruch 1, dadurch gekennzeichnet, daß, wenn der Hoch-Füllstand-Sensor (6) während einer bestimmten Zeitdauer aktiviert bleibt, der Ausgang des Austragsschachtes (2) im folgenden Öffnungszyklus vergrößert wird.

3. Vorrichtung zur Durchführung des Verfahrens gemäß einem oder mehreren der vorhergehenden Ansprüche mit einer kontinuierlichen Hochdruck-Filteranlage mit einem Filtergefäß, welches mit Fördermitteln (1) zum Austragen des von den Filterelementen gelösten Filterkuchens aus dem Filtergefäß versehen ist, wobei das Fördermittel (1) mit einem Austragsschacht (2) verbunden ist, der an oder nahe seinem unteren Ende mit einem Verschlußmittel (3) und weiterhin mit zwei oder mehr Sensoren (5,6) versehen ist, mittels welcher die Höhe des Kuchens innerhalb des Schachtes (2) bestimmt und das Verschlußmittel (3) des Schachtes (2) gesteuert werden kann, und ein Hoch-Füllstand-Sensor (5) das Öffnen des Austragsschachtes (2) steuert derart, daß, wenn der Kuchen eine bestimmte Maximumhöhe innerhalb des Schachtes erreicht, der Austragsschacht (2) für eine bestimmte Zeitdauer geöffnet wird, dadurch gekennzeichnet, daß ein Niedrig-Füllstand-Sensor (6) die Öffnungszeit steuert derart, daß die Öffnungszeit des nächsten Öffnungszyklus' mit einem festgelegten Zeitintervall vergrößert oder verkleinert wird in Abhängigkeit von dem Nicht-Erreichen bzw. dem Passieren einer bestimmten Soll-Minimum-Höhe des Kuchens innerhalb des Schachtes (2).

## Revendications

1. Procédé pour enlever le gâteau de filtre d'un appareil de filtrage, après l'avoir détaché des éléments filtrants, afin de l'extraire du corps de cet appareil qui assure de préférence un filtrage continu sous haute pression, le gâteau de filtrage étant conduit jusqu'à un puits d'évacuation (2) pour qu'il y tombe, ce puits (2) pouvant comporter un orifice à l'endroit ou à proximité de son extrémité inférieure, pour permettre de pousser le gâteau de filtrage hors du puits ou de l'éjecter sous l'effet d'une surpression interne dans le corps du filtre, la manoeuvre d'ouverture et fermeture de l'orifice du puits (2) étant commandée automatiquement au moyen d'au moins deux détecteurs (5,6) disposés dans le puits (2) pour déterminer la hauteur du gâteau dans le puits, un détecteur de niveau supérieur (5) commandant l'ouverture de l'orifice du puits pendant un certain temps lorsque le gâteau de filtrage atteint un certain niveau maximum dans le puits, caractérisé en ce qu'un détecteur de niveau inférieur (6) règle la durée d'ouverture de l'orifice du puits, pour augmenter ou diminuer cette durée d'un laps de temps déterminé lors de la manoeuvre d'ouverture suivante, suivant que le gâteau de filtrage, en tombant dans le puits (2), n'y a pas atteint un certain niveau minimum fixé ou au contraire à dépassé ce niveau.

2. Procédé selon la revendication 1, caractérisé en ce que la durée d'ouverture de l'orifice de sortie du puits d'évacuation (2) est augmentée pour la manoeuvre d'ouverture suivante, lorsque le signal émis par le détecteur de niveau supérieur (5) persite pendant un certain laps de temps.

3. Dispositif pour la mise en oeuvre du procédé conforme à l'une ou à plusieurs des revendications précédentes, comportant un appareil de filtrage continu à haute pression dont le corps est équipé d'un système de convoyage (1) pour évacuer hors du corps le gâteau de filtrage détaché des éléments filtrants, ce système de convoyage (1) aboutissent à un puits d'évacuation (2) pourvu d'un système d'obturation (3) à l'endroit ou à proximité de son extrémité inférieure, ce puits (2) étant pourvu d'au moins deux détecteurs (5,6) pour déterminer la hauteur du gâteau dans le puits (2), et le système d'obturation (3) du puits (2) étant soumis à un système de commande, un détecteur de niveau supérieur (5) commandant la manoeuvre d'ouverture du puits d'évacuation (2) de manière à assurer cette ouverture pendant une certaine durée lorsque le gâteau atteint dans le puits une certaine hauteur maximum, caractérisé en ce qu'il comporte un détecteur de niveau inférieur (6) qui peut modifier cette durée d'ouverture pour la manoeuvre d'ouverture suivante, en l'augmentant ou en la réduisant d'un laps de temps déterminé suivant que le gâteau de filtrage, en tombant dans le puits (2), n'y a pas atteint un certain niveau minimum fixé ou au contraire à dépassé ce niveau.
